# EUROPÄISCHE PATENTSCHRIFT

(11) **EP 1 447 358 B1**
(45) Veröffentlichungstag und Bekanntmachung des Hinweises auf die Patenterteilung: **24.08.2005**
(21) Anmeldenummer: 04002823.5
(22) Anmeldetag: 09.02.2004
(51) Int. Cl.: B65G 47/76

(54) **Verteileinrichtung für Stückgut**
Sorting apparatus for articles
Appareil de tri pour articles

(30) Priorität: 11.02.2003 DE 10305628
(43) Veröffentlichungstag der Anmeldung: 18.08.2004
(73) Patentinhaber: SIEMENS AKTIENGESELLSCHAFT, 80333 München (DE)
(72) Erfinder: Tiebel, Peter, 63456 Hanau (DE); Werner, Karsten, 64409 Messel (DE)

(56) Entgegenhaltungen:
- AU-B- 551 663
- JP-A- 57 151 529
- US-A- 3 093 236
- US-A- 3 429 417

## Beschreibung

Die Erfindung betrifft eine Verteileinrichtung für Stückgut innerhalb einer Förderanlage eines Materialflusssystems mit mindestens einer Zuförderstrecke und mindestens zwei Abförderstrecken, auf denen das Fördergut zu beliebigen vorherbestimmten Zielorte transportiert wird und die als Stetigförderer ausgebildet sind, wobei zum Verteilen des Fördergutes F ein motorisch angetriebenes, endlos um vertikal umlaufende Führungsrollen umlaufendes Ausschleusband vorgesehen ist, das zeitweise quer zur Förderrichtung in den Bereich der Förderebene der Zuförderstrecke hineinragend, eine das Fördergut auf eine der Abförderstrecken führende Barriere bildet.

Um den Materialfluss von Anlagen und Systemen auszuführen, werden Komponenten unterschiedlicher Bauart benötigt. Die Erfindung beschäftigt sich mit horizontalen Verteil- oder Transfereinrichtungen, deren Aufgabe es ist, das auf mindestens einem Zuförderer herantransportierte Fördergut zu beliebigen anderen Zielorte zu transportieren, die neben dem Förderweg der Zuförderstrecke liegen. Die bekannten Verteil- oder Transfereinrichtungen ermöglichen dem Fördergut ein Verlassen der Zuförderstrecken und das Eingliedern in eine Abförderstrecke auf unterschiedlichste Art und Weise und mit verschiedensten Komponenten und Konstruktionen. Dabei kann es sich bei der Abförderstrecke um die Verlängerung der Zuförderstrecke handeln, die sich nach einem Abzweig oder einer Kreuzung fortsetzt. In der Literatur sind eine sehr große Zahl verschiedenster technischer Lösungen beschrieben geworden und viele davon sind auch in die Praxis umgesetzt worden. Nachfolgend soll nur auf diejenigen Lösungen eingegangen werden, die der Gattung der vorliegenden Erfindung entsprechen.

Aus dem US-Patent 5,655,643 ist ein Verteilförderer bekannt geworden, der aus einer Zuförderstrecke und drei Abförderstrecken besteht, wobei eine der Abförderstrecken der Verlängerung der Zuförderstrecke entspricht. Seitlich neben der Zuförderstrecke sind in den Bereich der Förderebene der Zuförderstrecke gesteuert hineinschwenkbare Abweisarme gelagert, die motorisch aus ihrer Ruhestellung neben der Zuförderstrecke in ihre Wirkstellung quer zum Förderer verschwenkbar sind, in der sie das auf dem Förderer transportierte Fördergut auf eine der seitlichen Abförderstrecken lenken. Die Arme sind dazu an beiden Enden mit jeweils einer vertikal umlaufenden Führungsrolle versehen, um die ein endloses, im wesentlichen in einer vertikalen Ebene orientiertes Ablenkband geführt ist. Die Umlaufrichtung des Ablenkband entspricht der Richtung, in der das Fördergut abgelenkt werden soll, so dass das Fördergut mit Hilfe des Abweisebandes quer zur ursprünglichen Förderrichtung der Zuförderstrecke hin zum Förderer der Abförderstrecke gelenkt wird, solange der Abweisearm in seiner eingeschwenkten Wirkstellung verharrt.

Eine ähnliche Lösung ist in dem US-Patent 3,093,236 beschrieben, mit dem Unterschied, dass dort zwei ebenfalls um vertikal orientierte Führungsrollen endlos umlaufende Abweisbänder aus einer Ruhestellung beidseitig der Zuförderstrecke quer zu dieser in Richtung ihrer Längserstreckung in eine Wirkstellung verschoben werden, wo die Ablenkbänder eine Barriere für das Fördergut bilden und dieses seitlich auf die Abförderstrecke abweisen.

Beide Lösungen haben den Nachteil einer aufwendigen Mechanik, durch die ein relativ hoher Kostenaufwand durch die zweifachen Antriebe mit aufwendiger Steuerung, sowie ein großer Zeitaufwand zum Verschwenken oder Verschieben des Ausschleusbandes aus der Ruhestellung seitlich neben der Zuförderstrecke in den Bereich des Förderers entstehen, wenn das Ausschleusband entweder durch Querverschieben oder Verschwenken motorisch aus der Ruhestellung in die Wirkstellung und anschließend zurück in die Ruhestellung verbracht werden muss. Damit sind diese Einrichtungen teuer und ähnlich langsam wie andere mechanische TransferEinrichtungen nach dem Stand der Technik, z. B. Abweiser, Ausstosser oder Abschieber, mit denen das Fördergut seitlich vom Zuförderer abgeschoben oder abgezogen wird.

JP-Patent 57-151529 offenbart eine Verteileinrichtung gemäß dem Oberbegriff des Anspruchs 1.

Die Aufgabe der vorliegenden Erfindung besteht in der Schaffung einer Verteileinrichtung für Fördergut innerhalb einer horizontalen Förderanlage, bei der das Prinzip des das Stückgut seitlich abweisenden Abweisebandes verwendet wird, aber gleichzeitig auf den Ausschleusvorgang verlangsamende Verschiebe- oder Verschwenkmechanismen verzichtet wird. Statt dessen soll eine kostengünstige, schnelle, wirkungsvolle und funktionssichere Verteileinrichtung geschaffen werden, die insbesondere in dem Bereich der leichten Stückgutfördertechnik aufwendige Anlagenlösungen ersetzt.

Zur Lösung dieser Aufgabe wird eine Verteileinrichtung mit den Merkmalen des Anspruchs 1 vorgeschlagen.

Die vorgeschlagene Lösung verwendet das Prinzip des beispielsweise aus den US-Patenten 5,655,643 und 3,093,236 bekannten Abweisers mit Ausschleusbandes, mit dem Unterschied, dass bei der vorliegenden Erfindung die Verschwenkung oder Verschiebung des Ausschleusbandes in die Ausschleusposition entfällt. Stattdessen verwendet die Erfindung ein Ausschleusband mit unterschiedlich breiten Abschnitten, wobei der jeweils schmalere Abschnitt es ermöglicht, dass Fördergut ungestört über den schmaleren Abschnitt hinweg zu transportieren, weil dieser unter dem Höhenniveau bzw. der Förderebene des Förderers verläuft. Gelangt beim Umlaufen des Ausschleusbandes der Abschnitt mit der größerer Breite in den Bereich quer zum Zuförderband und bildet dort die aus dem Stand der Technik bekannte Barriere, so bewirkt er das Ablenken des Fördergutes auf die Abförderstrecke. Bei der erfindungsgemäßen Lösung sind weder Verschwenk- noch Hubeinrichtungen für das Ausschleusband erforderlich, es muß lediglich quer zur Zuförderstrecke ein Spalt zwischen den Förderrollen vorgesehen sein, der von dem Ausschleusband durchdrungen werden kann. Dieser Spalt läßt sich in dem erforderlichen Ablenkwinkel, beispielsweise unter 45°, durch unterschiedlich lange Förderrollen im Übergangsbereich problemlos schaffen.

Die Dimensionierung bzw. die Länge der unterschiedlich breiten Abschnitte des Ausschleusbandes ergibt sich aus den Abmessungen der Zuförderstrecke. Nach einem günstigen Merkmal der Erfindung entspricht die Umfangslänge jedes breiteren Abschnittes und die Umfangslänge jedes schmaleren Abschnittes des Ausschleusbandes der in Richtung der gebildeten Barriere gemessenen Breite der Zuförderstrecke. Bei dieser Variante wird sichergestellt, dass in der Abweisposition die gesamte Breite der Förderstrecke durch die Barriere gesperrt ist, auch dann, wenn das Ausschleusband, wie vorzugsweise vorzusehen ist, in einem nicht rechten Winkel quer zur Förderrichtung verläuft. Andererseits muß aber auch sichergestellt sein, dass die Förderstrecke vollständig freigegeben ist, wenn keine Ablenkung des Fördergutes erfolgen soll. Deshalb sollte sich die Länge des wirksamen schmaleren Abschnittes des Ausschleusbandes ebenfalls vorzugsweise über die Breite des Förderers erstrecken.

In einer günstigen Ausgestaltung der Erfindung wird vorgeschlagen, das Ausschleusband um mindestens drei seitlich der Zuförderstrecke angeordnete vertikale Führungsrollen in einer in der Draufsicht dreieckigen Umlaufbahn zu führen. Diese dreieckige Grundform reduziert die Anzahl der erforderlichen Führungsrollen für das umlaufende Ausschleusband auf ein Minimum. Mit einem Dreieckschenkel von etwa 45° zur Förderrichtung läßt sich der schräge Ablenkwinkel zur Abförderstrecke leicht darstellen. Der Bereich der Zuförderstrecke, der für das umlaufende Ausschleusband unterteilt werden muss, um einen Spalt zu bilden, ist bei einem etwa 45° Ausschleuswinkel relativ einfach zu konstruieren, weil nur wenige Rollen des Tragrollenförderers verkürzt werden müssen.

Die dreieckige Umlaufbahn des Ausschleusbandes ist vorzugsweise so angeordnet, dass eine der Seiten der dreieckigen Umlaufbahnen parallel oder senkrecht zur Förderrichtung orientiert ist. Besser noch ist es, wenn eine der Seiten parallel und eine andere Seite senkrecht zur Förderrichtung orientiert ist. Dann verläuft nämlich der Rücklauf des Ausschleusbandes parallel zu und zwischen zwei benachbarten Förderrollen. In dem parallel zur Förderrichtung verlaufenden "Dreieckschenkel" des Ausschleusbandes läßt sich raumsparend eine ausreichende Länge des breiteren Ausschleusbandes speichern, wenn eine Ablenkung des Fördergutes nicht gewünscht ist. Der ditte Schenkel des dreieckig geführten Ausschleusbandes, die Hypotenuse, ermöglicht die Abweisung schräg zur Förderrichtung in einem Winkel von beispielsweise 45°, sobald der breitere Bereich des Ausschleusbandes dort positioniert ist.

In einer anderen günstigen Ausgestaltung der Erfindung ist vorgesehen, dass das Ausschleusband um vier seitlich der Zuförderstrecke angeordnete vertikale Führungsrollen geführt ist. Wenngleich theoretisch die Führungsrollen auf den Eckpunkten eines Quadrates angeordnet sein könnten, so ist doch eine Lösung vorzuziehen, bei der die Umlaufbahn des Ausschleusbandes trapezförmig verläuft. Auf diese Weise lassen sich die schrägen Abweisflächen am Ausschleusband sehr einfach realisieren. Je nach Länge der durch die Abstände der Führungsrollen gegebenen Umlaufbahn und damit des Umfangs des Ausschleusbandes können auch mehrere breitere Bereiche, vorzugsweise zwei, sich mit vorzugsweise zwei schmaleren Bereichen abwechseln. Dadurch verdoppelt sich der Ausschleusbereich des Ausschleusbandes, und beim Ausschleusvorgang ist nur noch die Hälfte der gesamten Wegstrecke zurückzulegen. Die Ausschleuszeiten werden dadurch verkürzt.

Günstig ist es, wenn nach einem anderen Merkmal der Erfindung alle Abstände der vertikalen Führungsrollen zueinander gleich sind. Bei dieser Lösung lassen sich Längenbereiche mit schmaleren Abschnitten und solche mit breiteren Abschnitten jeweil beidseitig der Förderstrecke bereitstellen und sehr schnell zum Einsatz bringen, denn die zurückzulegenden Wege sind sehr kurz.

Problematisch kann bei der vorgestellten Lösung unter Umständen die Umlenkung des Ausschleusbandes im Rücklaufbereich sein, weil dieses die Förderstrecke im Rücklauf nochmals kreuzt. Dadurch könnte bei unzureichender Steuerung das in Förderrichtung geradeaus transportierte Fördergut mit dem rücklaufenden Ausschleusband kollidieren. Dieses Problem lässt sich aber nach einem anderen Merkmal der Erfindung dadurch beheben, dass das Ausschleusband in einer Ebene umläuft, die in Förderrichtung derartig geneigt ist, dass die stromabwärtige Rückführung der breiteren Abschnitte des Ausschleusbandes unterhalb der Förderebene der Zuförderstrecke erfolgt. In einem solchen Fall können erfindungsgemäß auch die Abstände der seitlich der Zuförderstrecke angeordneten vertikalen Führungsrollen kürzer als die quer zur Zuförderstrecke gemessenen Abstände der Führungsrollen sein.

In einer besonders günstigen Ausgestaltung der Erfindung ist vorgesehen, dass das Ausschleusband trapezförmig umläuft und die Barrieren wahlweise durch die Innen- und Außenseiten der breiteren Abschnitte des Ausschleusbandes gebildet werden. Mit einer solchen Anordnung lassen sich Ausschleusvorgänge nach beiden Seiten der Zuförderstrecke realisieren, in dem für eine Ausschleusrichtung die Außenseite des Ausschleusbandes als Barriere verwendet wird und für die andere Ausschleusrichtung die Innenseite des Ausschleusbandes innerhalb des trapezförmigen Umlaufes.

In allen beschriebenen Fällen kann es sinnvoll sein, dass Ausschleusband seitlich außerhalb der Zuförderstrecke S-förmig um Spannrollen zu führen, um einerseits den notwendigen Reibschluss zum Antrieb des Ausschleusbandes herzustellen und andererseits einen platzsparenden Speicher für das Band zu schaffen. Es empfiehlt sich, die Ausschleusbändern als Riemen, insbesondere als verstärkte oder armierte Flachriemen auszubilden. Natürlich ist es im Rahmen der Erfindung ebenfalls möglich, das Ausschleusband als Gliederkette, Zahnriemen, Stahlband, Kunststoffband oder ähnliches bekanntes Endlos-Transportmittel auszubilden. Wenn auch die Erfindung sich bevorzugt bei Rollenförderern anwenden lässt, ist es aber auch denkbar, Band-, Ketten- oder Riemenförderer so auszugestalten, dass die Erfindung dort zur Anwendung kommen kann.

Ein Ausführungsbeispiel der Erfindung ist in der Zeichnung dargestellt und wird nachfolgend beschrieben.

Es zeigt:
- Figur 1: eine Ausführungsform der erfindungsgemäßen Verteileinrichtung an einem Tragrollenförderer in der Draufsicht,
- Figur 1a: eine Teil-Ansicht des Ausschleusbandes mit den beiden unterschiedlichen Breiten,
- Figur 2: eine Ausführungsform der erfindungsgemäßen Verteileinrichtung mit einer anderen Umlaufbahn,
- Figur 3: den Verteilförderer mit S-förmigen Spannrollen,
- Figur 4: eine Ausführungsform des Verteilförderers mit parallelogrammartiger Umlaufbahn,
- Figur 5: den Verteilförderer nach Fig. 4 mit verkürzter Umlaufbahn und geschwenkter Umlaufebene,
- Figur 6: einen parallelogrammartigen Umlauf des Verteilförderers und
- Figur 7 und 8: in dreidimensionaler vereinfachter Darstellung den Ausschleusvorgang mit einer Ausführungsform der erfindungsgemäßen Einrichtung.

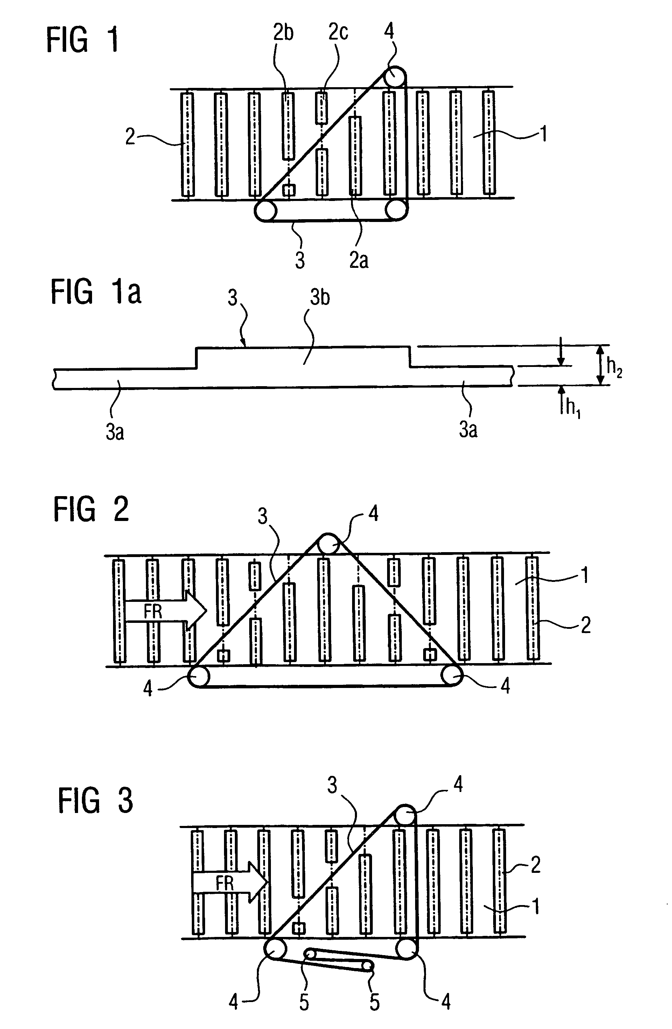

In den Zeichnungsfiguren sind Ausführungsformen der Erfindung grob schematisch dargestellt, wobei nur die wichtigsten Merkmale gezeichnet sind. In Figur 1 ist mit 1 eine aus einer Anzahl Förderrollen 2 bestehende Zuförderstrecke bezeichnet, deren Förderrollen 2a, 2b und 2c verkürzt bzw. unterbrochen ausgeführt sind, um das in der Draufsicht dreieckförmig umlaufende Ausschleusband 3 zwischen den Förderrollen 2a, 2b, 2c hindurchzuleiten. Die Rückführung des Ausschleusbandes erfolgt zwischen zwei ungekürzten Förderrollen, parallel zu diesen.

Das Ausschleusband 3, von dem ein Teilbereich in Figur 1a schematisch dargestellt ist, besteht über seine Umfangslänge gesehen aus einem schmalen Bereich 3a und einem breiten Bereich 3b und läuft endlos um die Führungsrollen 4 um, die beidseitig der Zuförderstrecke 1 um vertikale Achsen umlaufen, wobei mindestens eine der Führungsrollen 4 drehangetrieben ist. Beim Umlaufen um die Führungsrollen 4 gelangen abwechselnd die schmaleren Bereiche 3a, und die breiteren Bereiche 3b in den Bereich der Förderstrecke, wobei der breite Bereich 3b die Zuörderstrecke 1 absperrt, indem er eine Barriere für das darauf transportierte Fördergut F bildet. Beim weiteren Umlauf des Ausschleusbandes 3 wird das Stückgut an dem Ausschleusband seitlich zu dem Abförderband der Abförderstrecke abgelenkt und mitgenommen. Sobald der breite Bereich 3b des Ausschleusbandes 3 den Bereich der Förderstrecke 1 verlassen hat, kann nachfolgendes Fördergut F über die Tragrollen 2 der Zuförderstrecke 1 geradeaus auf die sich anschließende Abförderstrecke transportiert werden, ohne seitlich abgelenkt werden, weil sich der schmale Bereich des Ausschleusbandes unterhalb der Förderebene befindet.

In Figur 2 ist eine Lösung dargestellt, bei der die Führungsrollen 4 auf den Eckpunkten eines gleichseitigen Dreieckes angeordnet sind und somit eine in der Draufsicht dreieckige Umlaufbahn für das Ausschleusband 3 bilden. Die Förderrichtung für das Fördergut F ist bei FR als Pfeil angegeben. Auch bei diesem Beispiel sind einzelne Tragrollen 2 verkürzt 2a oder unterbrochen 2c, um das Ausschleusband 3 durch den dadurch gebildeten Spalt hindurchzuführen. Die Hypotenuse des durch das Ausschleusband 3 gebildeten Dreiecks ist so gewählt, dass ein entsprechend langer breiterer Bereich 3b des Ausschleusbandes seitlich neben dem Förderer gespeichert werden kann, wenn der Förderer für durchlaufendes Fördergut F freigegeben ist.

Figur 3 zeigt das Ausschleusband 3 in Dreiecksform mit innenliegender Hypotenuse entsprechend der Ausführung nach Figur 1. Bei dieser Lösung ist der Rückweg des Ausschleusbandes 3 in seiner Ausgangs-/Startposition wesentlich verkürzt. Zwar ergibt sich dadurch eine kürzere außen liegende Kathete, die nur einen kürzeren breiteren Bereich des Ausschleusbandes 3 aufnehmen kann, was jedoch einfach dadurch kompensierbar ist, dass weitere Umlenkrollen 5 vorgesehen werden, die als Bandspeicher und gleichzeitig als Spannelemente für das s-förmig geführte Ausschleusband genutzt werden können.

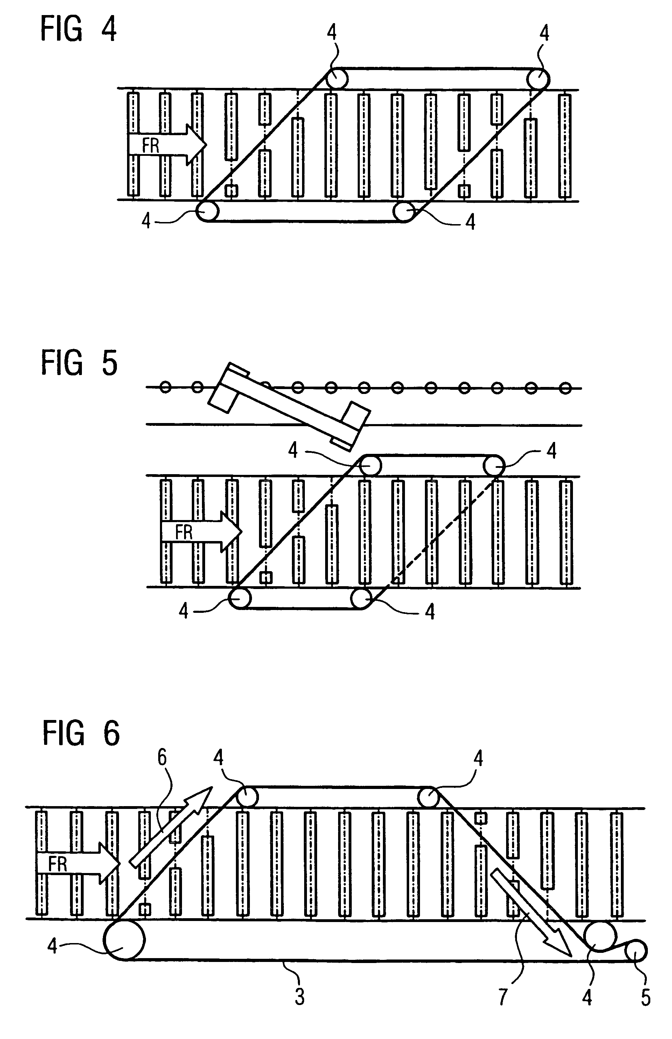

Um die Anzahl der Ausschleusungen zu steigern, bietet sich eine Parallelogrammanordnung des umlaufenden Ausschleusbandes 3 an, wie sie in Figur 4 dargestellt ist. Das Ausschleusband 3 kann in diesem Fall zwei breitere Bereiche 3b aufweisen, die sich symmetrisch auf der Umfangslänge des Ausschleusbandes 3 verteilen. Aufgrund der Verdopplung der dadurch entstehenden Ausschleusbereiche muss bei einem Umlauf immer nur noch die Hälfte der gesamten Wegstrecke zurückgelegt werden, wobei vorzugsweise die parallel verlaufenden Strecken etwa so lange sein sollten, wie die schräge Ausschleusstrecke quer zum Förderer.

Ein Problem kann entstehen, wenn aufgrund der Dimensionierung der Umlauflänge des Ausschleusbandes und der Länge der unterschiedlich breiten Abschnitte, der breite Bereich des Ausschleusbandes die Zu- oder Abförderstrecke 1 in dem Moment kreuzt, wo ein durchgefördertes (nicht ausgeschleustes) Fördergutteil diesen Bereich durchläuft. Die Problematik kann zum Beispiel dann auftreten, wenn nur jedes zweite Fördergut F der Förderstrecke ausgeschleust wird. Um dieses Problem zu vermeiden, sieht der in Figur 5 dargestellte Vorschlag der Erfindung vor, die Ebene, in der das Ausschleusband 3 verläuft, komplett stromabwärts des Ausschleusbereiches zu kippen, wie es im oberen Bereich der Figur 5 in der Seitenansicht schematisch dargestellt ist. Auf diese Weise lässt sich der "Rückweg" des Ausschleusbandes 3 komplett unter den Förderer verlegen, so dass es nicht zu einer Kollision mit geradeaus gefördertem Stückgut kommen kann. Dabei wäre es ausreichend, einen geringen Kippwinkel vorzusehen, der den breiteren Bereich des Ausschleusbandes im Rücklauf gerade eben unterhalb der Förderebene der Ausschlusstrecke hält.

Bei dieser Lösung ist es auch denkbar, die seitlich des Förderes angeordneten Umlenkrollen für das Ausschleuseband mit geringerem Abstand zueinander zu montieren, allerdings hätte dann die so ausgebildete Verteileinrichtung nur einen breiteren und einen schmaleren Bereich des Ausschleusebandes und somit nur einen Ausschleusbereich, was allerdings ein Vorteil sein kann, da dieser Ausschleusbereich länger und damit wesentlich stabiler ausgeführt werden kann. Vorteilhafterweise würde aber die Verteileinrichtung durch die kürzeren Seitenstrecken insgesamt kürzer werden, was einer flexiblen Einsatzmöglichkeit Zugute kommt.

Eine besonders günstige Alternative ist in Figur 6 dargestellt. Während die vorstehend beschriebenen erfindungsgemäßen Anordnungen nur ein Ausschleusen des Stückgutes in einer Richtung, also entweder nach links oder rechts von der Förderstrecke zulassen, ermöglicht die in Figur 6 dargestellte Alternative ein Ausschleusen nach beiden Seiten. Wie durch die Pfeile FR kenntlich gemacht, wird das Fördergut F von dem breiten Bereich des Ausschleusbandes 3 in Pfeilrichtung 6 abgelenkt. Ein nachfolgender schmaler Bereich des Ausschleusbandes 3 ermöglicht den Transport des Fördergutes in den Innenbereich des in der Draufsicht trapezförmig umlaufenden Ausschleusbandes 3 und ein Abweisen des Fördergutes an der Innenseite des breiteren Bereiches des Ausschleusbandes 3, wie durch den Pfeil 7 dargestellt. Bei dieser Anordnung ist ein Kippen der Umlaufebene des Ausschleusbandes 3 nicht möglich, Kollisionsgefahr kann aber, wie auch bei den anderen erfindungsgemäßen Lösungen, problemlos durch den Einsatz von Stauplätzen vor und zwischen den Ausschleusebereichen vermieden werden. Bei der Lösung nach Figur 6 bietet sich die Verwendung von jeweils zwei schmalen und zwei breiten Bereichen des Ausschleusbandes an.

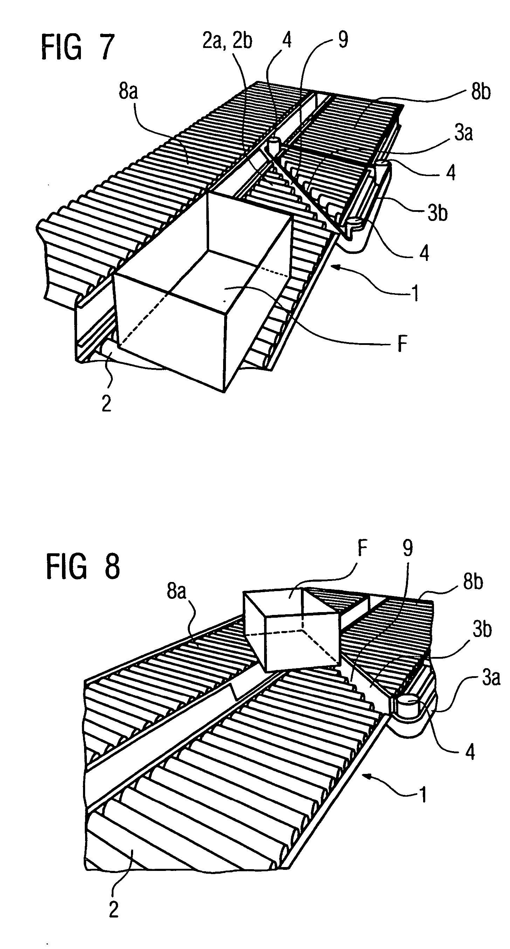

Zum besseren Verständnis der Erfindung zeigen die Figuren 7 und 8 in vereinfachter schematischen Darstellung den Ausschleusvorgang eines Fördergutes F mit einer Ausführungsform der erfindungsgemäßen Vorrichtung. Erkennbar ist eine Zuförderstrecke 1 und eine parallell dazu verlaufende Abförderstrecke 8a, jeweils aus Tragrollenförderern gebildet. Das im Dreieck um die Führungsrollen 4 geführte Ausschleusband 3 weist einen breiteren 3b und einen schmaleren Bereich 3a auf, die beim Umlauf des Ausschleusbandes 3 nacheinander den im Zuförderer zwischen den Tragrollen 2 bzw. 2a/2b gebildeten Spalt 9 durchlaufen, wobei wie in Figuir 7 erkennbar, der schmalere Bereich 3a des Ausschleusbandes 3 unterhalb der Förderebene verbleibt, so dass das Fördergut F geradeaus über die Zuförderstrecke 1 der anschließenden Abförderstrecke 8b zugeleitet werden kann.

In Figur 8 ist der breitere Bereich 3b des Ausschleusbandes 3 in den Bereich quer zur Zuförderstrecke 1 gelangt, wo er eine Barriere für das Fördergut F bildet und beim weiteren Umlaufen um die Führungsrollen 4 ein Ausschleusen des Fördergutes F auf die benachbarte Abförderstrecke 8a bewirkt. Sobald das Fördergut F ausgeschleust ist, folgt ein Bereich geringerer Breite 3a des Ausschleusbandes 3, über den ggf. das nächste Fördergut F hinwegtransportiert werden kann. Welches Fördergut F wohin geleitet wird, bestimmt eine übergeordnete Logik, die die angetriebenen Führungsrollen 4 des Ausschleusbandes 3 entsprechend steuert und entweder den breiteren Bereich 3b oder den schmaleren Bereich 3a des Ausschleusbandes 3 in Wirkstellung bringt.

## Patentansprüche

1. Verteileinrichtung für Stückgut innerhalb einer Förderanlage eines Materialflusssystems mit mindestens einer Zuförderstrecke (1) und mindestens zwei Abförderstrecken (8a, 8b), auf denen das Fördergut (F) zu beliebigen vorherbestimmten Zielorte transportiert wird und die als Stetigförderer ausgebildet sind, wobei zum Verteilen des Fördergutes (F) ein motorisch angetriebenes, endlos um vertikal umlaufende Führungsrollen (4) umlaufendes Ausschleusband (3) vorgesehen ist, das zeitweise quer zur Förderrichtung in den Bereich der Förderebene der Zuförderstrecke (1) hineinragend, eine das Fördergut (F) auf eine der Abförderstrecken (8a, 8b) führende Barriere bildet, wobei das Ausschleusband (3) quer zur Zuförderstrecke (1) zwischen entsprechend gestalteten Rollen (4) des Förderers umläuft, **dadurch gekennzeichnet, dass** über seinen Umfang mindestens zwei aufeinanderfolgende Abschnitte unterschiedlicher Breite (3a, 3b) aufweist, wobei beim Umlaufen des Ausschleusbandes (3) der schmalere Abschnitt (3a) stets unterhalb der Förderebene verbleibt und der breitere Abschnitt (3b) aus der Förderebene herausragend, zeitweise die Barriere für das Fördergut (F) bildet.

2. Verteileinrichtung für Stückgut nach Anspruch 1, **dadurch gekennzeichnet, dass** die Umfangslänge jedes breiteren Abschnittes (3b) und die Umfangslänge jedes schmaleren Abschnittes (3a) der in Richtung der Barriere gemessenen Breite der Zuförderstrecke (1) entspricht.

3. Verteileinrichtung für Stückgut nach Anspruch 1 oder 2, **dadurch gekennzeichnet, dass** das Ausschleusband (3) um mindestens drei seitlich der Zuförderstrecke (1) angeordnete vertikale Führungsrollen (4) in einer in der Draufsicht dreieckigen Umlaufbahn geführt ist.

4. Verteileinrichtung für Stückgut nach Anspruch 3, **dadurch gekennzeichnet, dass** eine der Seiten der dreieckigen Umlaufbahn parallel oder senkrecht zur Förderrichtung orientiert ist.

5. Verteileinrichtung für Stückgut nach einem oder mehreren der Ansprüchen 1 bis 4, **dadurch gekennzeichnet, dass** das Ausschleusband (3) um vier seitlich der Zuförderstrecke (1) angeordnete vertikale Führungsrollen (4) geführt ist.

6. Verteileinrichtung für Stückgut nach Anspruch 5, **dadurch gekennzeichnet, dass** die Abstände der seitlich der Zuförderstrecke (1) angeordneten vertikalen Führungsrollen (4) kürzer als die quer zur Zuförderstrecke (1) gemessenen Abstände der Führungsrollen (4) sind.

7. Verteileinrichtung für Stückgut nach Anspruch 5, **dadurch gekennzeichnet, dass** die Abstände der vertikalen Führungsrollen (4) zueinander gleich sind.

8. Verteileinrichtung für Stückgut nach Anspruch 5 oder 6, **dadurch gekennzeichnet, dass** das Ausschleusband (3) in einer in Förderrichtung nach unten geneigten Ebene umläuft und dass die stromabwärtige Rückführung der breiteren Abschnitte (3b) des Ausschleusbandes (3) unterhalb der Förderebene der Zuförderstrecke (1) erfolgt.

9. Verteileinrichtung für Stückgut nach einem oder mehreren der vorhergehenden Ansprüche, **dadurch gekennzeichnet, dass** das Ausschleusband (3) in der Draufsicht trapezförmig umläuft und die Barrieren wahlweise durch die über die Förderebene herausragenden Innen- und Außenseiten der breiteren Abschnitte (3b) des Ausschleusbandes (3) gebildet werden.

10. Verteileinrichtung für Stückgut nach Anspruch 1 bis 4, **dadurch gekennzeichnet, dass** das Ausschleusband (3) seitlich außerhalb der Zuförderstrecke (1) s-förmig um Spannrollen (5) geführt ist.

11. Verteileinrichtung für Stückgut nach Anspruch 1 bis 4, **dadurch gekennzeichnet, dass** das Ausschleusband (3) als Riemen ausgebildet ist.

## Claims

1. Distributing device for articles within a conveyor plant of a materials-handling system, having at least one infeed track (1) and at least two outfeed tracks (8a, 8b), on which the conveyed stock (F) is transported to predetermined destinations of choice and which are configured as continuous conveyors, for the distribution of the conveyed stock (F) a motor-driven delivery band (3), circulating continuously around vertically rotating guide pulleys (4), being provided, which, occasionally jutting transversely to the direction of conveyance into the region of the plane of conveyance of the infeed track (1), forms a barrier guiding the conveyed stock (F) to one of the outfeed tracks (8a, 8b), the delivery band (3) circulating transversely to the infeed track (1) between appropriately designed rollers (4) of the conveyor, **characterized in that** it has, over its periphery, at least two successive variously wide portions (3a, 3b), in the circulation of the delivery band (3), the narrower portion (3a) always remaining beneath the plane of conveyance and the wider portion (3b), jutting out of the plane of conveyance, occasionally forming the barrier for the conveyed stock (F).

2. Distributing device for articles according to Claim 1, **characterized in that** the peripheral length of each wider portion (3b) and the peripheral length of each narrower portion (3a) corresponds to the width of the infeed track (1) measured in the direction of the barrier.

3. Distributing device for articles according to Claim 1 or 2, **characterized in that** the delivery band (3) is guided around at least three vertical guide pulleys (4), disposed beside the infeed track (1), in a circuit which in top view is triangular.

4. Distributing device for articles according to Claim 3, **characterized in that** one of the sides of the triangular circuit is orientated parallel to or perpendicular to the direction of conveyance.

5. Distributing device for articles according to one or more of Claims 1 to 4, **characterized in that** the delivery band (3) is guided around four vertical guide pulleys (4) disposed beside the infeed track (1).

6. Distributing device for articles according to Claim 5, **characterized in that** the distances apart of the vertical guide pulleys (4) disposed beside the infeed track (1) are shorter than the distances apart of the guide pulleys (4) measured transversely to the infeed track (1).

7. Distributing device for articles according to Claim 5, **characterized in that** the spacings between the vertical guide pulleys (4) are equal.

8. Distributing device for articles according to Claim 5 or 6, **characterized in that** the delivery band (3) circulates in a plane which is angled downward in the direction of conveyance and **in that** the return guidance of the wider portions (3b) of the delivery band (3) in the downstream direction takes place beneath the plane of conveyance of the infeed track (1).

9. Distributing device for articles according to one or more of the preceding claims, **characterized in that** the delivery band (3) circulates, in the top view, in a trapezoidal shape, and the barriers are selectively formed by the inner and outer sides, jutting over the plane of conveyance, of the wider portions (3b) of the delivery band (3).

10. Distributing device for articles according to Claim 1 to 4, **characterized in that** the delivery band (3) is guided laterally outside the infeed track (1) in an S-shape around tension rollers (5).

11. Distributing device for articles according to Claim 1 to 4, **characterized in that** the delivery band (3) is configured as a belt.

## Revendications

1. Dispositif de répartition de colis dans une installation de convoyage d'un système à flux de matière comprenant au moins une zone (1) d'accès et au moins deux zones (8a, 8b) d'évacuation sur lesquelles le colis (F) est transporté à volonté vers des lieux de destination déterminés à l'avance et qui sont constituées en convoyeur permanent, dans lequel il est prévu pour répartir le colis (F) une bande (3) d'extraction entraînée par un moteur tournant sans fin sur des rouleaux (4) de guidage tournant verticalement, pénétrant de temps en temps transversalement à la direction de convoyage dans la partie du plan de convoyage de la zone (1) d'accès et formant une barrière guidant le colis (F) sur l'une des zones (8a, 8b) d'évacuation, la bande (3) d'extraction tournant transversalement à la zone (1) d'accès entre des rouleaux (4) du convoyeur conformés de manière adéquate, **caractérisé en ce que** la bande (3) a sur son pourtour au moins deux parties qui se succèdent, dans lesquelles, lorsque la bande (3) d'extraction tourne, la partie (3a) plus étroite reste toujours en dessous du plan de convoyage et la partie (3b) plus large fait saillie hors du plan de convoyage en formant de temps en temps la barrière pour le colis (F).

2. Dispositif de répartition de colis suivant la revendication 1, **caractérisé en ce que** la longueur de pourtour de chaque partie (3b) large et la longueur de pourtour de chaque partie (3a) étroite correspondent à la largeur, mesurée dans la direction de la barrière, de la zone (1) d'accès.

3. Dispositif de répartition de colis suivant la revendication 1 ou 2, **caractérisé en ce que** la bande (3) d'extraction passe suivant une voie de circulation triangulaire en vue en plan sur au moins trois rouleaux (4) verticaux de guidage disposés latéralement à la zone (1) d'accès.

4. Dispositif de répartition de colis suivant la revendication 3, **caractérisé en ce que** l'un des côtés de la voie de circulation triangulaire est parallèle ou perpendiculaire à la direction de convoyage.

5. Dispositif de répartition de colis suivant l'une ou plusieurs des revendications 1 à 4, **caractérisé en ce que** la bande (3) d'extraction passe sur des rouleaux (4) verticaux de guidage disposés latéralement à la zone (1) d'accès.

6. Dispositif de répartition de colis suivant la revendication 5, **caractérisé en ce que** les distances entre les rouleaux (4) verticaux de guidage disposés sur la zone (1) d'accès sont plus courtes que les distances entre les rouleaux (4) de guidage mesurées transversalement à la zone (1) d'accès.

7. Dispositif de répartition de colis suivant la revendication 5, **caractérisé en ce que** les rouleaux (4) verticaux de guidage sont équidistants.

8. Dispositif de répartition de colis suivant la revendication 5 ou 6, **caractérisé en ce que** la bande (3) d'extraction tourne dans un plan incliné vers le bas dans la direction de convoyage et **en ce que** le retour en aval du courant des parties (3b) larges de la bande (3) d'extraction s'effectue en dessous du plan de convoyage de la zone (1) d'accès.

9. Dispositif de répartition de colis suivant l'une ou plusieurs des revendications précédentes, **caractérisé en ce que** la bande (3) d'extraction tourne en forme de trapèze en vue en plan et les barrières sont formées au choix par les faces intérieure et extérieure faisant saillie au-dessus du plan de convoyage des parties (3b) plus larges de la bande (3) d'extraction.

10. Dispositif de répartition de colis suivant l'une des revendications 1 à 4, **caractérisé en ce que** la bande (3) d'extraction est guidée latéralement à l'extérieur de la zone (1) d'accès en forme de S sur des rouleaux (5) tendeurs.

11. Dispositif de répartition de colis suivant l'une des revendications 1 à 4, **caractérisé en ce que** la bande (3) d'extraction est constituée sous la forme d'une courroie.
